# EUROPEAN PATENT APPLICATION

(11) **EP 4 541 834 A1**
(43) Date of publication of application: **23.04.2025**
(21) Application number: 23383076.9
(22) Date of filing: 20.10.2023
(51) Int. Cl.: C08G 59/18, C08G 59/50, C09J 163/00, C09J 179/00, F03D 1/06

(54) **PROCESS TO ADHERE PARTS OF A WIND TURBINE BASED ON INDUCTION HEATING**

(71) Applicant: Aerox Advanced Polymers, SL., 46185 La Pobla de Vallbona (ES)
(72) Inventor: CORTÉS FIBLA, Raul, 46185 La Pobla de Vallbona (ES); SAKALYTE, Asta, 46185 La Pobla de Vallbona (ES); CANO GONZÁLEZ, Laida, 46185 La Pobla de Vallbona (ES)
(74) Representative: Elzaburu S.L.P.

(57) **Abstract**

The present invention relates to a method of bonding at least two-component containing epoxy paste adhesive composites, wherein at least one magnetic field responsible particle is dispersed within adhesive. The method further compromises the step of obtaining a mixture of at least an epoxy resin with magnetic particles which reacts with at least one amine by applying an electromagnetic field of given strength alternating at a given frequency to the adhesive to allow fast bonding of the material. This method is especially useful for adhering components of wind turbines.

## Description

### FIELD OF THE INVENTION

The present invention relates to a method of bonding at least two-component containing epoxy paste adhesive composites, wherein at least one magnetic field responsible particle is dispersed within adhesive. The method further compromises the step of applying an electromagnetic field of given strength alternating at a given frequency to the adhesive to allow fast bonding of the material. Therefore, the present invention belongs to the field of adhesives based on polymers, especially for those applicable to wind turbines.

### BACKGROUND OF THE INVENTION

Composite wind turbine blades can be manufactured using numerous processing methods. The two most common approaches are through pre-preg application or liquid composite moulding techniques (e.g., vacuum infusion or resin transfer moulding). Resin vacuum infusion is increasingly used in large-scale wind energy systems mainly due to cost savings and the suitability of the material processing and design. Each composite blade can be manufactured in half, in separate moulds, closed together and adhesively bonded. One of the most important stages of the composite manufacturing process in many industrial sectors as the wind industry is the structural elements bonding that guarantee the optimized transfer of the loads. This stage is one of the last before surface finishing (coating and painting) of the part and is a crucial production issue in terms of labor, equipment and tooling capacity. As the volume production increases, constraints may appear due to the total production mould tool usage time; this mainly depends on the resin mold filling, curing and adhesive bonding cycles. At this point, new moulding technology development represents the encouraging business opportunity to tackle these cost dominant drivers.

The most common ways of heating adhesive bondlines are convection ovens, thermal blankets, and radiant heaters. Convection ovens work by heating the surrounding air, which then transfers heat to the adherend. Thermal blankets heat the adherend by direct contact. Radiant heaters transfer their energy to the adherend via infrared radiation. All of these processes heat the outer surface of the adherend, and the heat is then conducted to the bondline. The extra time and energy associated with heating the adherends, rather than heating the bondline directly, reduces the overall process efficiency. Induction heating works by exposing a conductive or magnetic material to a high-frequency electromagnetic field, usually between 50 kHz and 100 MHz. Any material that heats up when exposed to an electromagnetic field is called a "susceptor" material. The electromagnetic field can induce heating through two mechanisms. If the susceptor material is conductive, then eddy currents are induced in the conductor, and the conductor will then heat due to resistive effects. If the material is magnetic, hysteresis losses from the magnetization-demagnetization process cause additional heating. This mechanism of heating is called hysteresis heating. Induction heating can be used for adhesive curing if a susceptor material is embedded in the bondline and the adherends are nonsusceptors. In this case, an incident induction field will penetrate through the adherends and directly heat the bondline, enabling adhesive cure. The primary advantage of this approach is that energy is directly coupled into the bondline, enabling rapid processing of embedded bondlines. Induction heating has the ability to focus the heating locally within the adhesive, which can help minimize the risk of accidental overheating of adjacent components as well as remove the need for direct electrical access via wiring.

US2012/0160828A1 discloses a composite material compromising magnetic field responsive particles distributed in a reversible crosslinked polymer and the method of heating-treating the material. These materials selected from the specific group consisting of Diels-Alder rection, nitroso dimerization, azlactone-phenol adduct formation, alkoxyamine formation, cyclic carbonate formation, polyalkylhydrazone formation, (2+2) cycloaddition, and combination thereof. Regarding the method described in this patent, it is a method of heat-treating a material by exposing it to an electromagnetic field of sufficient strength and frequency to cause breakage of thermoreversible bonds. This method may repair the fracture in a composite or bond to composites applying an electromagnetic field of given frequency to the composite. However, this document is focusing on reversible polymer and debonding process without focusing on curing time reduction.

US2011 /0305907A1 discloses a surface of a reinforcement having a coating made of composition containing an epoxy resin and component that accelerates the curing of the resin, wherein said mixture is subjected to a heat treatment. This document describes reinforcements, more particularly for the production of components of large surface area, such as, for example, for blades for wind turbines. This document is using temperature treatment which is carried out in the temperature range of 40-150ºC. in, for example, a continuous oven, a continuous microwave oven or by induction heating. Therefore, this document is focusing on infusion resin acceleration, but not the bonding paste.

US2012/0164900A1 discloses a reinforcement having a coating on the surface compromising a solid resin (epoxy resin) and carbon nanotubes, wherein said coating can be fixed on the surface of the reinforcement by heat treatment. However, this patent is focusing on wind turbine blade infusion system improvement, but no on structural adhesive.

A structural adhesive is a substance that fastens together elements to produce high modulus, high strength, permanent bonds in a load-bearing structure. It must be capable of transmitting structural stress without loss of structural integrity within design limits. Thus, it substantially contributes to the structural integrity of continuously stressed assemblies during their expected service lives under relatively severe service environments. In the wind turbine blades manufacturing process, where two stiffeners or shear webs are bonded into the shells the higher mechanical performance is required and consequently epoxy adhesive systems are used. The use of thixotropic materials (in general two-component adhesive) for bonding the blades is essential to exhibit good sag resistance for process application. Epoxy resin is the material of choice when bonding fiberglass/epoxy laminate materials, such as those used in the manufacture of wind turbine blades. After the installation of turbines, the blades are constantly submitted to vibrations due to wind conditions. Therefore, fatigue resistance or toughness are essential adhesive properties to ensure the longevity of the blades. In fact, if the adhesive bond starts to fail, it cannot undergo stress anymore and then the internal composite structure of the blade is damaged and fails as well.

There are two conventional approaches for joining polymer matrix composites - mechanical fasteners and surface bonding techniques. Mechanical fasteners are the most basic joining method. However, mechanical fasteners also introduce stress concentration points which limits structural performance. Additionally, the weight penalty associated with mechanical fasteners is a detriment to the construction of the lightweight structures as a wind turbine blades. Surface bonding techniques are preferred to mechanical fasteners due to their superior load transfer characteristics. For high-performance engineering applications, surface bonding is achieved using elevated temperature - cure, thermosetting adhesives. In order to prevent defects and ensure adequate mechanical properties, it is necessary for the adhesive to be sufficiently cured and not to suffer thermal damage due to the exothermic curing reaction. Finding a balance between shorting cure cycle and ensuring optimal bonding quality is a key aspect of the bonding process. Therefore, new manufacturing solutions must be developed in order to make composites and composite bonding cost-attractive, energy efficient and applicable to large-scale assemblies, while delivering product quality as the current curing process. The extra time and energy associated with heating the adherends, rather than heating the bondline directly could reduce the overall process efficiency.

Adhesive bondlines in the blade can vary considerably in thickness, shape and their surroundings, which results in different curing behavior. It is important to provide optimal heat flux and curing conditions for each adhesive area. The thick substrate layer results in delayed heating and cooling of adhesive. However, the smaller exothermic reaction of thin adhesive bondlines leads to a slower cure process. High degree of cure in all areas of adhesive is necessary to ensure acceptable mechanical performance. In the traditional blade bonding process to reach high degree of cure it is necessary apply high temperatures maintain control heating and cooling of adhesive since improper heating compromises chemical, mechanical and heat resistance properties of adhesive. Controlled temperatures and even heat without hot and cold spots is critical and that is why bonding process is one of the most time-consuming operations in blade assembly. Induction heating has the ability to focus the heating locally within the adhesive, which can help minimize the risk of accidental overheating of adjacent components as well as remove the need for direct electrical access via wiring. Using induction heating is possible to shorten the curing process of adhesive and prevent the overheating of critical areas in the joint. Such adhesive would be useful in applications such as wind turbine blades curing cycle.

### DESCRIPTION OF THE INVENTION

The present invention relates to a method of bonding at least two-component containing epoxy paste adhesive composites, wherein at least one magnetic field responsible particle is dispersed within adhesive. The method further compromises the step of applying an electromagnetic field of given strength alternating at a given frequency to the adhesive to allow faster bonding of the material. The described method provides faster cure cycle of thixotropic epoxy-based adhesive.

In one embodiment, the at least one magnetic field responsible particle selected from the group consisting of a ferrimagnetic particle. In another embodiment, the at least one magnetic field responsible particle compromises a particle selected from the groups consisting of ferrite, nickel, manganese, zinc oxide and combination thereof.

In another embodiment, the average size of the at least one magnetic field responsive particle is between 20 nm to 150 µm.

In another embodiment, the concentration of the at least one magnetic field responsive particle is between 0.25 to 10 wt% based on resin.

In another embodiment, small coupling distances between adhesive and induction equipment are required to achieve maximal energy efficiency of the set-up, which requires good accessibility of the joint and reduces operating flexibility.

In another embodiment, the surroundings of the joint (up to +- 30 cm) have to be free of conductive materials (Aluminium, CFRP), as the required magnetic field strength for the susceptor particles will trigger significant heat- generation within those materials. Examples such as clamps, tools, rivets or other parts of the structure have therefore to be carefully separated from the induction set- up. This way susceptor- assisted induction- heated adhesive bonding can effectively become a greener, next- generation manufacturing process for the different industries.

The invention also includes a method of accelerating wind turbine blade curing cycle. The method compromises the step of providing at least two adhesive containing composites, wherein adhesive compromises at least one magnetic field responsive particle is dispersed within adhesive. The method further compromises the step of applying electromagnetic field of a given strength within given frequency to achieve the temperature not higher than adhesive degradation temperature to join adhesive containing composites.

### DETAILED DESCRIPTION OF THE INVENTION

The invention relates to a pocess for adhering the components of wind turbines by creating an adhesive that may be heated via induction, minimizing residual thermal stress in the adhesive bond line, thus providing faster and controlled cure. As a consequence, the properties of the material may be similar to conventional heating. Advantageously, the heating mechanism of the invention are faster than conventional heating, since here only adhesive will be heated and not the entire mold system. Particularly, the invention includes creating an adhesive compromising magnetic field responsive particles distributed in said adhesive. When magnetic field responsible particles are exposed to an electromagnetic field with alternating frequency, the particles generate heat, which will lead to final cure of adhesive.

The adhesive obtained by the process of the invention may be used in a variety of applications. Specifically, they may be used as adhesive for joining wind turbine blades.

### DETAILED DESCRIPTION

The process of the invention is based on using a reaction between epoxy and amine compound resulting in high performance structural adhesive.

In a first aspect, the present invention refers to a process for adhering the components of wind turbines comprising the following steps:
a. providing a mixture comprising:
   i. an epoxy resin with the following formula: 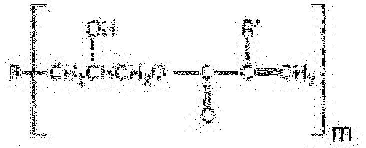 wherein R is selected from C1-C10 alkyl or aryl and R' is selected from H or C1-C4 alkyl, mixed with particles selected from ferromagnetic particles of iron, manganese, zinc, nickel and copper,
   ii. adding to the mixture of previous step an amine selected from the following group:

      H₂N-R1-NH₂ 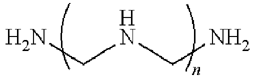 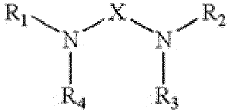
   wherein R1 is selected from substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group and a combination thereof and n is an integer from 1 to 30, and optionally other active ingredients selected from tougheners, curing agents, accelerators, fillers, glass fibers, pigments or combinations thereof;
b. depositing the mixture of step a. onto the surface of a substrate and applying heat generated in an electromagnetic field to induce the curing of the mixture.

In one embodiment, adhesive according to the present invention is obtained by reacting epoxy compound having a functionality equal or greater than 2 and amine compound having a functionality equal or greater than 2 in absent of solvent.

The substrate onto which the process of the invention is carried out is preferably the first component of a wind turbine.

Examples of suitable epoxy compounds for use in the present invention are:

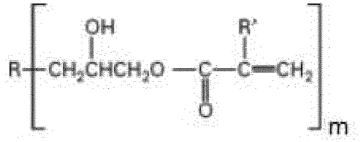

Their general formula is shown in, where R is any aliphatic or aromatic residue and R' is typically either H or CH3.

Preferably, the epoxy compound is selected from the group consisting of Bisphenol A, Bisphenol F, Reactive diluents and mixtures thereof.

These epoxy compounds are preferred because they provide a good compromise between mechanical performance and thermal performance.

Suitable commercially available epoxy compounds for the use in the present invention include, but not limited to epoxy resins such as the diglycidyl ethers of bisphenol-A, the advanced diglycidyl ethers of bisphenol-A, the diglycidyl ethers of and bisphenol-F, diglycidylether of 1.6-hexanediol, aliphatic mono-functional epoxy reactive diluent (C12-C14 glycidyl ether), 1,4 butanediol diglycidyl ether), Bisphenol F, Araldite DY-E, Araldite DY-H, Araldite DY-D, jER 828, jER 807, EPILOX P 13-18G, EPILOX P 13-21G, EPILOX A 19-00G, EPILOX F 17-00G, Araldite GY 250, Epon 828.

Examples of suitable amine compounds for use in the present invention are selected from:

H₂N-RO-NH₂

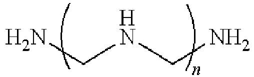

wherein R0 is selected from the group consisting of a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group and a combination thereof; n is an integer from 1 to 30; and m is an integer from 1 to 30.

Preferably amine compound is selected from the group consisting of such as for example Jeffamine D-230, Jeffamine D-400, Jeffamine D-2000, Jeffamine D-4000, Jeffamine T-403 Fatty acids, C18-unsatd., dimers, polymers with tall-oil fatty acids and triethylenetetramine
The present invention provides polyamide curing agent compositions comprising the reaction product of (1) an amine component comprising at least one multifunctional amine of the following formula: 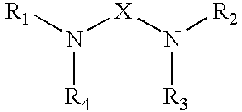 where R1 is CH2CH2CH2NH2; R2, R3 and R4 are independently selected from H or CH2CH2CH2N and X is selected from CH2CH2 or CH2CH2CH2 with (2) a dimer fatty acid or ester component, optionally, containing a monofunctional fatty acid.

In one aspect of the invention R2 and R3 are not H simultaneously.

The fatty acids used in the current invention in combination with the dimer acids include C8 to C22, preferably C16 to C22 mono-carboxylic acids containing from 0 to about 4 units of unsaturation. EPILOX H 15-50, EPILOX H 15-40, Aradur 140, Aradur 145, Aradur 250, Ancamide 351, Ancamide 3030, Hanamide 140).

The present invention provides a diamine with the general formula (CH₃)₃C₆H₇(NH₂)(CH₂NH₂).

These amine compounds are preferred because they provide a good compromise between mechanical performance, thermal performance, and reactivity.

In one embodiment, the magnetic field responsible particles are ferromagnetic particles of iron, manganese, zinc, nickel and copper. Preferably, nanoparticles are selected from Fe2O3 - Iron (III) oxide (20-40 nm), Iron(II,III) oxide (Fe3O4), 20-30 nm, 98+%, Magnetite, g-Iron(III) oxide (Fe2O3), 20-40 nm, 99%, Maghemite, a-Iron(III) oxide (Fe2O3), 92 nm, 99.5%, Hämatite, a-Iron(III) oxide (Fe2O3), 35 nm, 99.5%, Hämatite, Mn-Ferrite (MFS-F (0,2-2 µm), MFS-S (2-10 µm), M10 (>10 µm)), Manganese Zinc ferrite, Nickel Zinc ferrite.

These nanoparticles are preferred because they provide a good compromise between heating rate and achieved curie temperatures.

In one embodiment, the size of the magnetic field responsive particles is selected so that the particles generate heat through a hysteresis heating mechanism. The critical single domain diameter can depend both on particle composition and shape. The preferred nanoparticle size can vary from 20 nm up to 250 microns.

The particle concentration can be selected to obtain the desired amount of heating for the selected magnetic field strength and frequency. The particle concentration can vary from 0.25 up to 10 wt% based on the resin.

These nanoparticles concentrations are preferred because they provide a good compromise between adhesive mechanical performance and heating rate achievement.

The magnetic field strength is selected to provide the desired amount of heating. In the embodiment, the magnetic field strength is selected to be in or above a range where the sample temperature increases to achieve preferred curing temperature. The desired magnetic field strongly depends on selected nanoparticles concentrations, type, and size. The magnetic field frequency of the alternating electromagnetic field is from 100kHz to 1MHz.

In the embodiment, the magnetic field responsive particles generate heat through a hysteresis heating mechanism. For ferrimagnetic and ferromagnetic materials, the hysteresis heating approach provides a self-limiting, controlled temperature, which is between 70-200 ºC.

Uniform heating of adhesive is achieved due to selected nanoparticles concentration and their heating capacity.

The energy of the exothermic reaction of the resin adhesive is dependent on the heat rate of the externally applied heat source. Higher heating rates increase the energy of the exothermic reaction and therefore adhesive peak temperature. Nanoparticles increase the heating rate and will not rely anymore on conduction coming from mold. This could improve energy transfer along the entire bond line to achieve faster and uniform cure. By tailoring nanoparticles particle sizes, dispersion, structures, and composition it is possible to fine tune the kinetics and thermodynamics of the reaction. Also, there is a great potential to minimize or even eliminate thermal gradients through the entire bond-line by reducing residual stresses across adhesive this way achieving a complete cure.

Critical aspects of the curing process are identified in the thin adhesive bondlines and heat transfer through the thick composite. Magnetic nanoparticles with curie temperature limited heating are preferred. These materials use hysteresis heating and, if all other heating effects are dominated by the hysteresis heating, will not heat beyond their Curie temperature. The benefit of this approach is that magnetic powders can be chosen whose Curie temperatures can be matched to the desired processing temperature of the adhesive system. If the electromagnetic field powerful enough to maintain this hysteresis heating, then the adhesive dwell at this temperature for as long as it is exposed to the field. This feature greatly improves bondline temperature control and uniformity, without the use of sensors or complex controls.

An induction unit operates by sending an alternating current through a conductive coil, which then generates an alternating magnetic field. Induction heating can achieve thermal powers necessary for thermal curing of adhesive, enabling both rapid heating and high dwell temperatures.

In general, induction heating caused and adhesive to heat rapidly and then dwell at some relatively stable temperature. The main advantages of induction heating arise from utilization of the Curie temperature of the magnetic particles. With the well-defined Curie temperature, magnetic powder-loaded adhesive system can be thermally self-regulating. Some magnetic nanoparticles do not possess a well-defined Curie temperature, so that dwell temperature is highly dependent on induction field strength.

The choice of adhesive system is critical for effective utilization of induction heating. Induction heating would serve as an optimum type of curing for an adhesive system without a dependency on the heating rate (e.g., free radical initiated).

The main influences of the induction setup originate from the coil geometry, the applied electrical power, and the coil current. In addition, the frequency, and the coupling distance play an important role.

### BRIEF DESCRIPTION OF FIGURES

*Figure 1*. 0.25% Fe2O3 nanoparticles containing adhesive induction cure.
*Figure 2**. Selected pancake coil for the induction trials.*
*Figure 3*. 10% Fe2O3 nanoparticles containing adhesive induction cure.

### EXAMPLES

### Example 1: Nanoparticles dispersion preparation in ADHESIVE 1

First, 50g of Epoxy (mainly composed of diglycidyl ethers of bisphenol-A and other additives) was weighted and mixed for 5 min. Secondly, 0.125 g of nanoparticles of Fe₂O₃ 20 - 40 nm were introduced and were mixed for 2x5 min.

### Sample preparation

For the induction trial, 14.6 g of prepared mixture (epoxy+nanoparticles) was weighted and 5.4 g of Amine (mainly composed of polyetheramine and polyamidoimidazoline and other additives) was added. The mixture was mixed using a Speedmixer for 2x30 s at 1200 rpm. The total amount of the mixture (1.5 g) was introduced into the prepared mold with diameter of 15 mm and the height of 11 mm.

### Induction equipment

High frequency inductive heating equipment DW-UHF-6KW-III was used. This equipment can work between 500 KHz to 1.1 MHz with the current variation between 1 to 30 A. The helical copper five-turn coil with the diameter of 30 mm and height of 30 mm was used for induction trials. The copper coil was refrigerated with water at 9ºC. Increments in temperature-time curves (measured at the center of the coil) were recorded applying an AMF at 636 KHz and using different magnetic field amplitudes. The nanocomposites temperature was measured using an Infrared camera located over the specimens. Samples temperature was monitored by measuring the surface temperature on top of the sample.

### Induction example

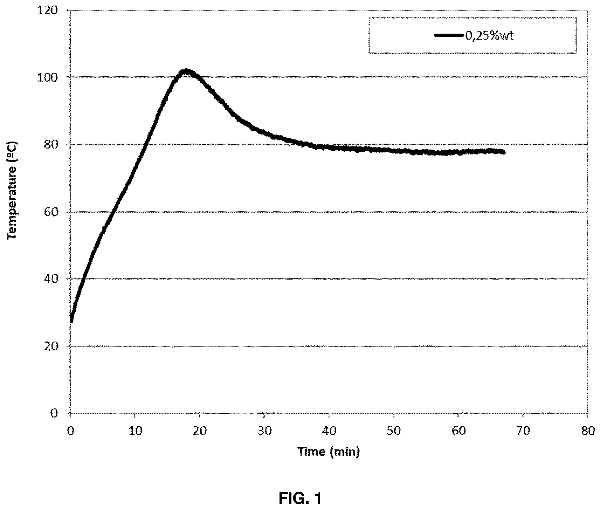

Fe₂O₃ 20 - 40 nm nanoparticles with 0.25% concentration were used for the test. The heating properties of 1.5 grams of sample was placed in the center of the coil and magnetic field was applied. The obtained results are shown in Figure 1.

For comparison, standard cure of adhesive was done using the same dimensions of adhesive and the same amount (1.5g) and was placed in the oven using standard cure cycle of ramp to 70 ºC, 4 h dwell at 70 ºC, ramp down (total cure time 6h). Obtained results are shown in the table below.

**Table 1. Comparing results of adhesive after induction heating with 0.25% of nanoparticles and standard cure results.**

| Power Level | Nanoparticle concentration | Processing time | Cure degree | Tg |
|---|---|---|---|---|
| Standard cure oven | - | 6h | 95% | 74.5 |
| 1A | 0.25% | 67 min | 96% | 66.3 |

Using induction heating it is possible to achieve higher cure degree of adhesive. After 67 min of induction heating the adhesive shows Tg of 66.3ºC, which is close to the target of 70ºC. By increasing nanoparticles concentration or induction time it would be possible to achieve faster cure with the same adhesive properties, sin standard cure achieves desired Tg only after 6h.

### Example 2: Nanoparticles dispersion preparation with ADHESIVE 2

First, 180g of Epoxy (Part A, resin) was weighted and mixed for 5s at 2000 rpm using a Speedmixer. Secondly, 20 g of Nanoparticles of Fe2O3 20 - 40 nm were introduced and mixed manually. Then the mixture was placed in the Speedmixer and stirred at 2000 rpm for 30 seconds. Additionally, to achieve homogenous dispersion of nanoparticles the prepared mixture was stirred for 20 minutes using a stirrer at a speed between 1200-1300 rpm.

### Sample preparation

For the induction trial, 14.6 g of prepared mixture (Resin+Nanoparticles) was weighted and 5.4g of Amine (Hardener) was added. The mixture was mixed using a Speedmixer for 2x30 s at 1200 rpm.

The prepared mixture was introduced into the prepared mold with diameter of 2 cm and the height of 1 cm.

### Induction equipment

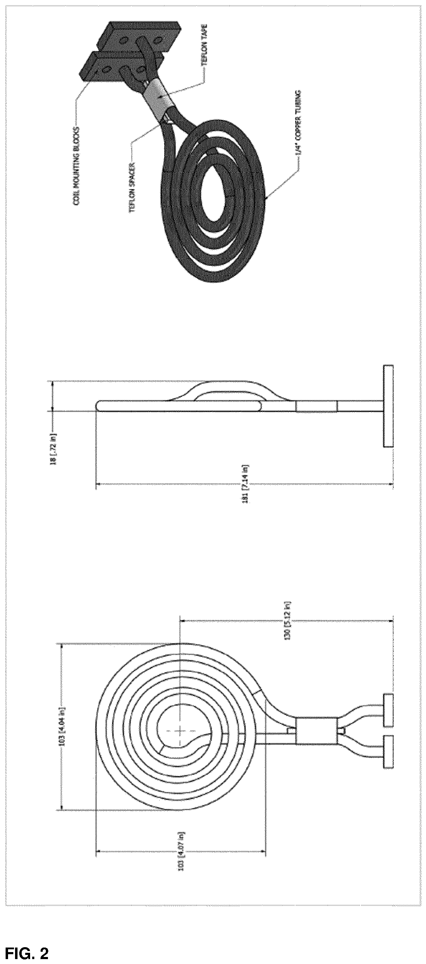

The EASYHEAT induction heating systems equipped to operate over a broad frequency range of 150-400 kHz and power control within 25 W resolution was used. This equipment RF terminal power is between 1.2-2.4 kW and RF coil current is between 300-400 A. The strength of the induced magnetic field was controlled by altering the equipment's coil current which can be varied up to 800 Amperes. The coil was cooled via water circuit. The unit auto-tunes its field frequency, depending on the coil current and coil type used. The pancake with four turn coil and diameter of 103 mm was used. The picture of the coil is presented in Fig. 2.

### Induction example

Fe₂O₃ 20 - 40 nm nanoparticles with 10% concentration were used for the test. The sample was placed on center of the glass fiber reinforced panel with the thickness of 1.8 mm and magnetic field was applied. Samples temperature was monitored by measuring the surface temperature on top of them using IR sensor.

For comparison, standard cure of adhesive was done using the same dimensions of adhesive and the same amount and was placed in the oven using standard cure cycle of ramp to 75 ºC, 4 h dwell at 75 ºC, ramp down (total cure time 6h). Obtained results are shown in the table below.

**Table 2. Induction results using pancake coil and standard cure.**

| Power Level | Nanoparticle concentration | Processing time | Cure degree | Tg |
|---|---|---|---|---|
| Standard cure oven | - | 6h | 99% | 69.5 |
| 150A | 10% | 3h | 93.9% | 49.8 |
| 174A | 10% | 2h | 98.2% | 71.9 |
| 200A | 10% | 30min | 97.8% | 63.4 |

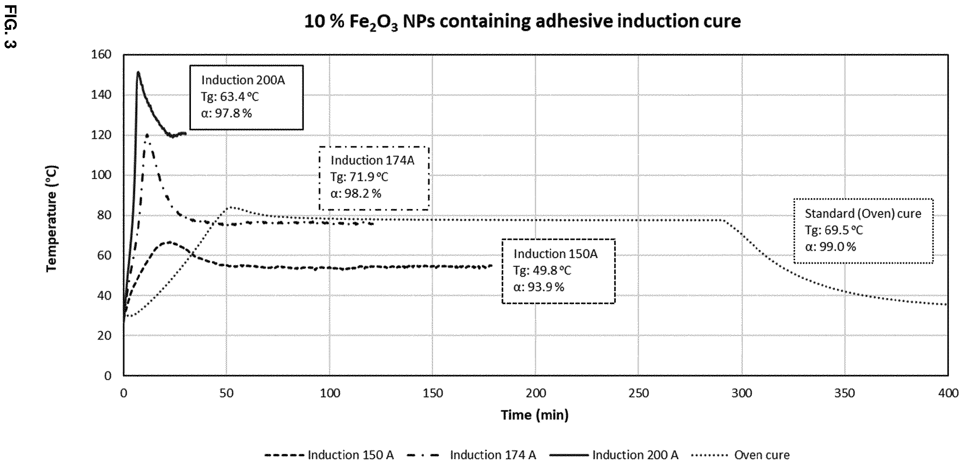

Induction intensity was selected at 150A, 174A and 200A (Figure 3). Using induction heating it is possible to achieve higher Tg and cure degree just in 2h compared to 6 h of standard cure. Induction heating leads to faster cure of adhesive. Maximum temperature achieved during induction heating is higher compared to standard cure of adhesive, but this could be controlled by reducing induction intensity or by selecting feasible induction cure cycle.

### Conclusions:

- Adhesive achieves faster cure using induction heating.
- Possibilities to control temperature by varying nanoparticles concentration
- Faster cure to reach Tg and cure degree development.
- The addition of up to 10% NPs does not affect the mechanical and chemical properties of the adhesive.
- This induction heating process could be applied to bond wind turbine blades.

## Claims

1. Process for adhering the components of wind turbines comprising the following steps:
a. providing a mixture comprising:
i. an epoxy resin with the following formula: 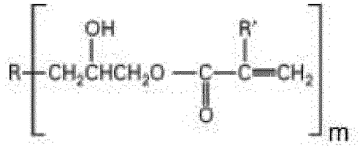 wherein R is selected from C1-C10 alkyl or aryl and R' is selected from H or C1-C4 alkyl, mixed with particles selected from ferromagnetic particles of iron, manganese, zinc, nickel and copper,
ii. adding to the mixture of previous step an amine selected from the following group:
H₂N-R0-NH₂ 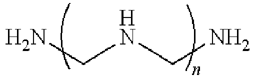 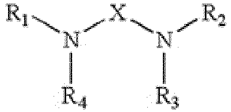
wherein R0 is selected from substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group, R1 is CH2CH2CH2NH2; R2, R3 and R4 independently selected from H or CH2CH2CH2N and X is selected from CH2CH2 or CH2CH2CH2 and m is an integer from 1 to 30 and n is an integer from 1 to 30, and optionally other active ingredients selected from tougheners, curing agents, accelerators, fillers, glass fibers, pigments or combinations thereof;
b. depositing the mixture of step a. onto the surface of a substrate and applying heat generated in an electromagnetic field to induce the curing of the mixture.

2. Process according to previous claim, wherein the epoxy is selected from Bisphenol A or its derivatives, Bisphenol F or its derivatives, and mixtures thereof.

3. Process according to the previous claim, wherein the epoxy is selected from diglycidyl ethers of bisphenol-A, the advanced diglycidyl ethers of bisphenol-A, the diglycidyl ethers of and bisphenol-F, diglycidylether of 1.6-hexanediol, aliphatic mono-functional epoxy reactive diluent (C12-C14 glycidyl ether), 1,4 butanediol diglycidyl ether.

4. Process according to any one of previous claims, wherein the amine is selected from polyetheramine, 3-(Aminomethyl)-3,5,5-trimethylcyclohexan-1-amine or polyamidoimidazoline.

5. Process according to any one of previous claims, wherein the size of the particles is from 20 nm to 250 microns.

6. Process according to any one of previous claims, wherein the particle concentration can vary from 0.25 up to 10 wt% in respect of the weight of the resin.

7. Process according to any one of previous claims, wherein the magnetic field frequency of the alternating electromagnetic field is from 100kHz to 1MHz.

8. Process according to any one of previous claims, wherein the temperature of the process is controlled between 70-200 ºC.

9. Process according to any one of previous claims, wherein the substrate is a first component of the wind turbine.
